# EUROPÄISCHE PATENTANMELDUNG

(11) **EP 3 613 618 A1**
(43) Veröffentlichungstag der Anmeldung: **26.02.2020**
(21) Anmeldenummer: 18190497.0
(22) Anmeldetag: 23.08.2018
(51) Int. Cl.: B60J 1/20, E06B 9/52

(54) **INSEKTENSCHUTZANORDNUNG FÜR EINE ÖFFNUNG EINER MOBILEN FAHRZEUGEINHEIT**

(71) Anmelder: REMIS Gesellschaft für Entwicklung und Vertrieb von technischen Elementen mbH Köln, 50829 Köln (DE)
(72) Erfinder: HAJREDINAJ, Semsi, 40215 Düsseldorf (DE); DREßLER, Wolfgang, 50739 Köln (DE)
(74) Vertreter: terpatent Patentanwälte ter Smitten Eberlein-Van Hoof Rütten Daubert

(57) **Zusammenfassung**

Insektenschutzanordnung für eine Öffnung (12) einer mobilen Fahrzeugeinheit (11), wie zum Beispiel einem Wohnmobil, Wohnwagen, etc., mit einer Rahmenanordnung (16), die zwei Führungsschienen (18, 20) und mindestens eine die Führungsschienen (18, 20) verbindende Rahmenleiste (22) aufweist, wobei an der mindestens einen Rahmenleiste (22) ein ausziehbares Insektenschutzgitter (14) vorgesehen ist, das in den Führungsschienen (18, 20) beweglich geführt ist, wobei die Führungsschienen (18, 20) jeweils über ein Drehgelenk (34, 36) mit der mindestens einen Rahmenleiste (22) verbunden sind.

## Beschreibung

Die Erfindung betrifft eine Insektenschutzanordnung für eine Öffnung einer mobilen Fahrzeugeinheit, wie zum Beispiel einem Wohnmobil, Wohnwagen, etc., mit einer Rahmenanordnung, die zwei Führungsschienen und mindestens eine die Führungsschienen verbindende Rahmenleiste aufweist, wobei an der mindestens einen Rahmenleiste ein ausziehbares Insektenschutzgitter vorgesehen ist, das in den Führungsschienen beweglich geführt ist. Bei bewohnbaren mobilen Fahrzeugeinheiten, wie zum Beispiel Wohnmobilen oder auch Wohnwagen, besteht der Wunsch, Tür- bzw. Fensteröffnungen mit Insektenschutzanordnungen zu versehen, um das Fahrzeuginnere bei geöffneten Türen bzw. Fenstern vor eindringende Insekten zu schützen. Diese Insektenschutzanordnungen sind dabei so zu gestalten, dass sie die Tür bzw. das Fenster beim Öffnungs- bzw. Schließvorgang nicht behindern. Zudem sollen derartige Insektenschutzanordnungen auf einfache Weise für Öffnungen der mobilen Fahrzeugeinheit nachzurüsten sein, da üblicher Weise die Fahrzeugeinheiten nicht mit einer derartigen Insektenschutzanordnung ausgerüstet sind.

Aus der deutschen Gebrauchsmusterschrift DE 20 2010 011 878 U1 ist eine gattungsgemäße Insektenschutzanordnung bekannt, die in mobilen Fahrzeugeinheiten zum Schutz vor eindringenden Insekten bei geöffneten Türen bzw. Fenstern einzusetzen ist. Diese Insektenschutzanordnung weist jedoch den Nachteil auf, dass die Rahmenanordnung für den Nutzer oder auch für eine Kfz-Werkstatt aufwendig zu montieren ist. Eine fertig vormontierte Rahmenanordnung weist dahingehend den Nachteil auf, dass diese lediglich unter großem Aufwand, verbunden mit großen Kosten, versendet werden kann.

Aufgabe der Erfindung ist es daher, eine Insektenschutzanordnung bereitzustellen, die die oben genannten Nachteile auf einfache und kostengünstige Weise vermeidet.

Diese Aufgabe wird erfindungsgemäß dadurch gelöst, dass die Führungsschienen jeweils über ein Drehgelenk mit der mindestens einen Rahmenleiste verbunden sind. Hierdurch kann die Insektenschutzanordnung und dabei insbesondere die Rahmenanordnung im eingeklappten Zustand auf sichere und einfache Weise transportiert werden. Ein Endverbraucher oder ein Monteur einer Kfz-Werkstatt muss dann lediglich die Rahmenanordnung auseinanderklappen, um die konfigurierte Insektenschutzanordnung im betreffenden Fahrzeug auf bekannte Weise einbauen zu können.

In besonders vorteilhafter Weise weist mindestens eine Führungsschiene eine Feststellanordnung zur Verbindung mit der mindestens einen Rahmenleiste auf. Hierdurch kann gewährleistet werden, dass zumindest die eine festzustellende Führungsschiene in einem gewünschten Winkel, üblicherweise einem rechten Winkel, zur Rahmenleiste verläuft. Hierbei kann die Feststellanordnung eine Klick-Verbindung aufweisen. In besonders vorteilhafter Weise weist die Festellanordnung ein in der Führungsschiene oder in der mindestens einen Rahmenleiste beweglich gelagertes Zapfenorgan auf, das in einer herausgezogenen Position eine Drehung des Drehgelenkes ermöglicht. Um eine zusätzliche Sicherung während des Transportes oder auch im ausgeklappten Zustand zu gewährleisten, kann in besonders vorteilhafter Weise das Zapfenorgan durch ein Federorgan unter Vorspannung in der Führungsschiene oder in der mindestens einen Rahmenleiste beweglich gelagert sein.

In vorteilhafter Weise ist eine Arretieranordnung für das Insektenschutzgitter in den Führungsschienen vorgesehen. Hierdurch soll gewährleistet sein, dass das Insektenschutzgitter in jeglicher Verfahrposition arretiert werden kann. In besonders vorteilhafter Weise ist hierbei die Arretieranordnung als Schnurbremse ausgebildet. Hierbei Kann eine Schnur der Schnurbremse durch das Drehgelenk federbelastet durch ein Federorgan geführt ist. Somit ist es möglich die Schnurbremse auf einfache Weise an die konfigurierte Insektenschutzanordnung an zu passen und die Längenänderung aufgrund des Einklapp- bzw. Ausklappvorganges aus zu gleichen.

In einer besonders vorteilhaften Ausführungsform sind die beiden Führungsschienen als obere und untere, in Fahrzeuglängsrichtung verlaufende Führungsschienen ausgebildet. Hierdurch ist es insbesondere bei einem Einbau in eine Türöffnung möglich, das Insektenschutzgitter nur teilweise zu verfahren, um einer Person den Zugang ins Fahrzeuginnere zu ermöglichen. Bei einer derartigen Anordnung ist es dann auch vorteilhaft, zumindest die untere Führungsschiene mit einem Feststellanordnung zu versehen, um einen korrekten Einbau bezüglich der Fahrzeugkarosserie zu gewährleisten.

In besonders vorteilhafter Weise ist in der Öffnung eine zweite Rahmenleiste vorgesehen ist, die abdichtend mit dem Insektenschutzgitter zusammenwirkt. Diese zweite Rahmenleiste ist nicht fester Bestandteil der Rahmenanordnung, sollte jedoch aus designtechnischen Gründen sauber an die Führungsschienen anschließen. Hierbei ist es vorteilhaft, wenn die zweite Rahmenleiste um eine Vertikalachse schwenkbar oder als Bürste ausgeführt ist, um einen Schließvorgang der Türe bzw. des Fensters nicht zu behindern.

In besonders vorteilhafter Weise kann das Insektenschutzgitter an seiner von der ersten Rahmenleiste abgewandten Seite eine Griffleiste aufweisen, um dem Nutzer ein einfaches Verfahren des Insektenschutzgitters zu ermöglichen, und um ein einwandfreies Anliegen an der zweiten Rahmenleiste zu gewährleisten.

Um das Insektenschutzgitter im geöffneten Zustand oder während des Transportes zu lagern, kann an der ersten Rahmenleiste eine Gehäusekassette zur Aufnahme des Insektenschutzgitters vorgesehen sein.

Die Erfindung wird nachfolgend anhand einer Zeichnung näher erläutert. Hierbei zeigt:
Figur 1 eine perspektivische Ansicht auf eine Insektenschutzanordnung-Aussicht eines Fahrzeuginnenraumes,
Figur 2 eine Draufsicht auf die Insektenschutzanordnung aus Figur 1 in nicht eingebautem Zustand,
Figur 3 eine Detailansicht einer Rahmenanordnung mit einer zweiten Führungsschiene in einer ausgeklappter Position,
Figur 4a, 4b, 4c, 4d eine Detailansicht der Rahmenanordnung aus Figur 3 mit unterschiedlichen Stellungen der zweiten Führungsschiene, und
Figur 5 eine Detailansicht der Rahmenanordnung im Bereich einer ersten Führungsschiene.

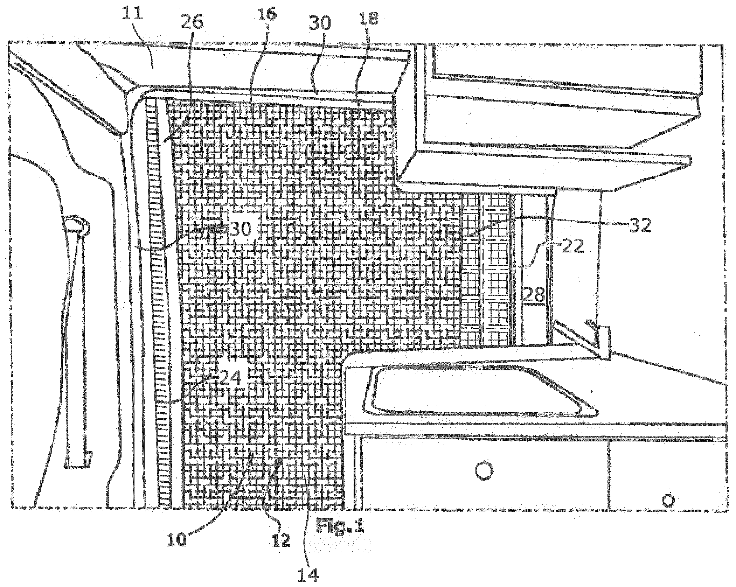

Figur 1 zeigt in einer perspektivischen Ansicht eine erfindungsgemäße Insektenschutzanordnung 10 für einen als Wohnwagen ausgebildete

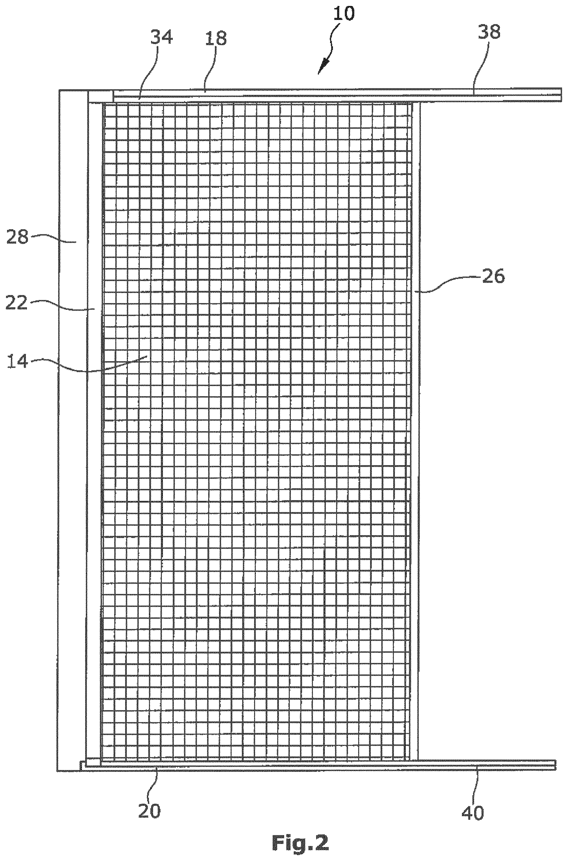

Fahrzeugeinheit 11 mit einer als Türöffnung ausgebildeten Öffnung 12, die durch ein Insektenschutzgitter 14 verschlossen ist. Die Insektenschutzanordnung 10 weist hierzu eine Rahmenanordnung 16 auf, die eine erste obere Führungsschiene 18 und eine zweite untere Führungsschiene 20 (siehe hierzu Figur 2) und eine erste, diese beiden Führungsschienen 18, 20 verbindende Rahmenleiste 22 besitzt. Des Weiteren ist eine zweite Rahmenleiste 24 vorgesehen, die im vorliegenden Ausführungsbeispiel als Bürste ausgeführt ist, an der eine Griffleiste 26 des Insektenschutzgitters 14 abdichtend anliegt. Des Weiteren weist die Insektenschutzgitteranordnung 10 eine Gehäusekassette 28 auf, die an der ersten Rahmenleiste 22 vorgesehen ist, und das Insektenschutzgitter 14 im aufgerollten oder eingefalteten Zustand sicher aufnimmt. Die Insektenschutzanordnung 10 ist auf bekannte Weise an einer Türdichtung 30 einer Fahrzeugkarosserie für eine durch das Insektenschutzgitter 10 verdeckt angedeutete Fahrzeugtür 32 befestigt.

Figur 2 zeigt nun die Insektenschutzgitteranordnung 10 in einer Draufsicht im nicht verbauten Zustand. Die Führungsschienen 18, 20 sind hierbei über hier schematisch angedeutete Drehgelenke 34, 36 an die erste Rahmenleiste 22 angelenkt. Hierdurch ist es besonders einfach, die für das jeweilige Fahrzeugmodell konfigurierte Insektenschutzgitteranordnung 10 im zusammengeklappten Zustand auf sichere Weise einer Werkstatt oder einem Endkunden zuzusenden. Der Monteur oder Endkunde muss dann nur noch die Führungsschienen 18, 20 ausklappen und dann die Insektenschutzgitteranordnung 10 auf bekannte Weise in der Fahrzeugeinheit 11 anbringen.

Das Insektenschutzgitter 14 ist hierbei durch eine jeweils in den Führungsschienen 18, 20 angeordnete, stufenlose Arretieranordnung 38, 40 in jeder gewünschten Position zu arretieren. Im vorliegenden Ausführungsbeispiel ist die Arretieranordnung 38, 40 durch eine an sich bekannte schematisch angedeutete Schnurrbremse ausgebildet. Hierbei ist eine Schnur der Schnurbremse 38, 40 durch das Drehgelenk 34, 36 federbelastet durch ein nicht dargestelltes Federorgan geführt, wodurch die Schnurbremse bei der Herstellung der Insektenschutzgitteranordnung gebrauchsfertig ein zu stellen ist und eine Längenänderung bei dem später noch dargestellten Einklapp- bzw. Ausklappvorgang ausgleichen kann.

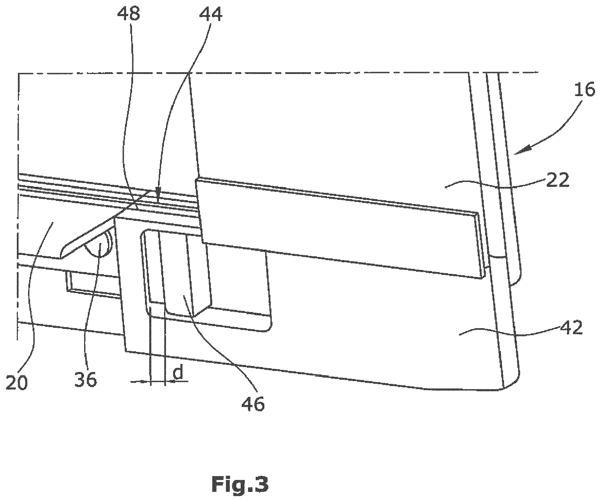

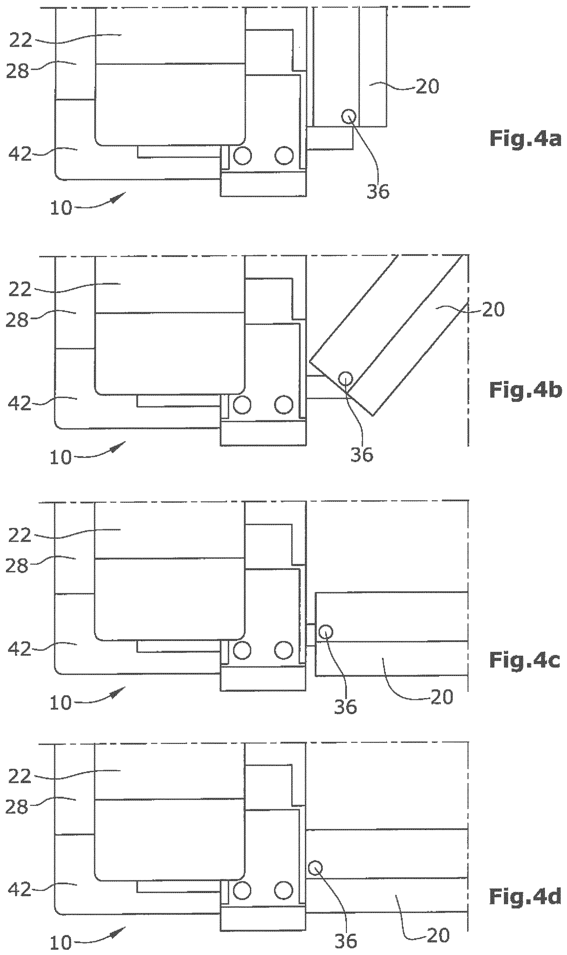

Figur 3 zeigt nun ein Detail der Rahmenanordnung 16 wiederum mit einer im verbauten Zustand zum Fahrzeuginneren gerichteten Seite. Die erste Rahmenleiste 22 besitzt hierzu eine Rahmenkassette 42, die im vorliegenden Ausführungsbeispiel Bestandteil einer Feststellanordnung 44 ist. Die Feststellanordnung 44 weist außerdem ein Zapfenorgan 46 auf, das in der Rahmenkassette 42 um eine Strecke d verschiebbar gelagert ist. Die untere Führungsschiene 20 ist über das Drehgelenk 36 mit dem Zapfenorgan 46 verbunden. In der dargestellten Position ist keine Drehung der Führungsschiene 20 bezogen auf die Rahmenleiste 22 möglich, da die Führungsschiene durch eine Kante 48 der Rahmenkassette 42 blockiert ist. Um eine Drehbewegung zu ermöglichen, muss die Führungsschiene 20 um die Strecke d verschoben werden. Dieser Vorgang wird anhand der Figuren 4a bis 4d näher erläutert. Um sowohl im eingeklappten als auch im ausgeklappten Zustand im vorliegenden Ausführungsbeispiel die Führungsschiene 20 gegen ein unbeabsichtigtes Ausklappen, insbesondere im nicht verbauten Zustand zu sichern, kann ein nicht weiter dargestelltes Federorgan auf das Zapfenorgan 46 einwirken, um eine Vorspannung auf das Zapfenorgan 46 auszuüben

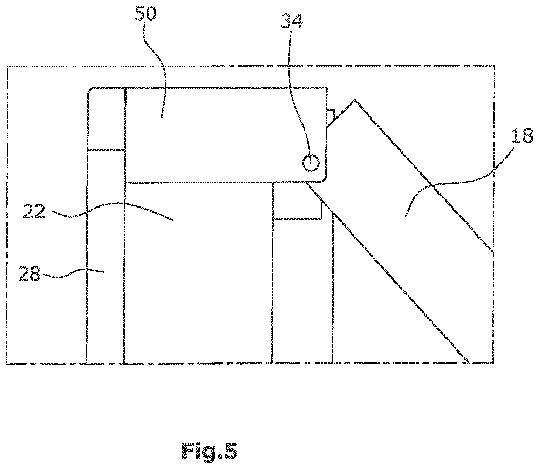

Die Figuren 4a bis 4d zeigen nun die untere Rahmenanordnung 10 im Bereich des Drehgelenkes 36 zunächst in einem Zustand, in dem die Führungsschiene 20 eingeklappt ist. Die Darstellung ist nun von der zur Figur 3 entgegengesetzten Seite gewählt. In diesem eingeklappten Zustand, wobei das Insektenschutzgitter 14 in der Gehäusekassette 28 gelagert ist, wird die Insektenschutzgitteranordnung 10 an eine Kfz-Werkstatt oder an den Endverbraucher geschickt. Um die Rahmenanordnung in einen Zustand zu überführen, der ein einfaches Montieren der Insektenschutzgitteranordnung 10 ermöglicht, wird die Führungsschiene 20, wie Figur 4b zeigt, nach unten verschwenkt. Figur 4c zeigt nun die Position der Führungsschiene 20 mit ausgefahrenem Zapfenorgan 46 und Figur 4d die endgültige Position mit der fixierten Führungsschiene 20. In ähnlicher Weise wird auch die obere Führungsschiene 18, wie Figur 5 zeigt, von einem eingeklappten Zustand in einen ausgeklappten Zustand überführt. Figur 5 zeigt hier lediglich den Zwischenschritt mit einer leicht verschwenkter Führungsschiene 18. Die Führungsschiene 18 ist hierbei nicht über eine Feststellanordnung 44 mit der Rahmenleiste 22 verbunden, um auf einfache Weise einen einfachen Spielausgleich zu ermöglichen. Auch hier ist eine zweite Rahmenkassette 50 zur Abdeckung des hier verdeckt dargestellten Drehgelenks 34 vorgesehen.

## Patentansprüche

1. Insektenschutzanordnung für eine Öffnung (12) einer mobilen Fahrzeugeinheit (11), wie zum Beispiel einem Wohnmobil, Wohnwagen, etc., mit einer Rahmenanordnung (16), die zwei Führungsschienen (18, 20) und mindestens eine die Führungsschienen (18, 20) verbindende Rahmenleiste (22) aufweist, wobei an der mindestens einen Rahmenleiste (22) ein ausziehbares Insektenschutzgitter (14) vorgesehen ist, das in den Führungsschienen (18, 20) beweglich geführt ist, **dadurch gekennzeichnet, dass** die Führungsschienen (18, 20) jeweils über ein Drehgelenk (34, 36) mit der mindestens einen Rahmenleiste (22) verbunden sind.

2. Insektenschutzanordnung nach Anspruch 1, **dadurch gekennzeichnet, dass** mindestens eine Führungsschiene (20) eine Feststellanordnung (44) zur Verbindung mit der mindestens einen Rahmenleiste (22) aufweist.

3. Insektenschutzanordnung nach Anspruch 2, **dadurch gekennzeichnet, dass** die Feststellanordnung (44) eine Klick-Verbindung aufweist.

4. Insektenschutzanordnung nach Anspruch 2, **dadurch gekennzeichnet, dass** die Festellanordnung (44) ein in der Führungsschiene (20) oder in der mindestens einen Rahmenleiste (22) beweglich gelagertes Zapfenorgan (46) aufweist, dass in einer herausgezogenen Position eine Drehung des Drehgelenkes ermöglicht.

5. Insektenschutzanordnung nach Anspruch 4, **dadurch gekennzeichnet, dass** das Zapfenorgan (46) durch ein Federorgan unter Vorspannung in der Führungsschiene (20) oder in der mindestens einen Rahmenleiste (22) beweglich gelagert ist.

6. Insektenschutzanordnung nach einem der vorhergehenden Ansprüche, **dadurch gekennzeichnet, dass** eine Arretieranordnung (38, 40) für das Insektenschutzgitter (14) in den Führungsschienen (18, 20) vorgesehen ist.

7. Insektenschutzanordnung nach Anspruch 6, **dadurch gekennzeichnet, dass** die Arretieranordnung (38, 40) als Schnurbremse ausgebildet ist.

8. Insektenschutzanordnung nach Anspruch 7, **dadurch gekennzeichnet, dass** eine Schnur der Schnurbremse (38, 40) durch das Drehgelenk (34, 36) federbelastet durch ein Federorgan geführt ist.

9. Insektenschutzanordnung nach einem der vorhergehenden Ansprüche, **dadurch gekennzeichnet, dass** die beiden Führungsschienen (18, 20) als obere und untere, in Fahrzeuglängsrichtung verlaufende Führungsschienen (18, 20) ausgebildet sind.

10. Insektenschutzanordnung nach einem der vorhergehenden Ansprüche, **dadurch gekennzeichnet, dass** in der Öffnung (12) eine zweite Rahmenleiste (24) vorgesehen ist, die abdichtend mit dem Insektenschutzgitter (14) zusammenwirkt.

11. Insektenschutzanordnung nach Anspruch 10, **dadurch gekennzeichnet, dass** die zweite Rahmenleiste (24) um eine Vertikalachse schwenkbar oder als Bürste ausgeführt ist.

12. Insektenschutzanordnung nach einem der vorhergehenden Ansprüche, **dadurch gekennzeichnet, dass** das Insektenschutzgitter (14) an seiner von der ersten Rahmenleiste (22) abgewandten Seite eine Griffleiste (26) aufweist.

13. Insektenschutzanordnung nach einem der vorhergehenden Ansprüche, **dadurch gekennzeichnet, dass** an der ersten Rahmenleiste (22) eine Gehäusekassette (28) zur Aufnahme des Insektenschutzgitters (14) vorgesehen ist.
